# EUROPEAN PATENT APPLICATION

(11) **EP 3 431 237 A1**
(43) Date of publication of application: **23.01.2019**
(21) Application number: 18183631.3
(22) Date of filing: 16.07.2018
(51) Int. Cl.: B26F 1/10, B26D 7/00, B26D 7/26, B26D 1/38, B26D 7/08

(54) **THERMAL COMPENSATING MOUNT FOR A KNIFE ROLL IN A WEB PROCESSING MACHINE**

(30) Priority: 17.07.2017 US 201762533451 P
(71) Applicant: Elsner Engineering Works, Inc., Hanover, PA 17331 (US)
(72) Inventor: Mathy, John Madden, Jr., Stewartstown, PA Pennsylvania 17363 (US)
(74) Representative: Johnstone, Douglas Ian

(57) **Abstract**

A rotary cutting device (10) comprising an anvil (50) and a roll cutter (20) having at least one knife (30) affixed thereon, the roll cutter (20) being rotatably mounted to a machine by bearings disposed on opposing ends of the roll cutter (20) and supported by bearing support blocks (40) connected to a machine frame (100). A thermal isolating mounting arrangement orients the bearing support blocks (40) so that thermal growth or expansion occurs along an axis generally perpendicular to a plane in which the knife (30) and anvil (50) interface. A thermal isolator (60) may also be disposed between the bearing support blocks (40) and the machine frame (100) to further inhibit heat transfer into the machine frame (100) and the resultant effect on knife position.

## Description

### BACKGROUND OF THE INVENTION

This invention relates to machines for converting bulk rolls of a web material into smaller rolls suitable for consumers, commonly referred to as rewinders, and more specifically, to an improved mounting arrangement for a web cutting device used to cut or perforate the web material in such rewinding machines.

Continuous webs of fabric, paper and the like are conventionally severed by feeding the web through cutting devices having at least one rotating roll carrying one or more knives engageable with an anvil, either stationary or mounted on an opposing roll. The continuous web is fed along a conveyor means, passes between the knife roll and anvil where it may be cut into a number of segments or perforated . Cut segments or the perforated web is conveyed away from the cutting device. By modifying the knife and interface with the anvil, the web may be perforated rather than severed using a similar roll arrangement. U.S. Pat. Nos. 5,363,728 and 8,540,181 illustrate roll winding machines of the type on which this invention might be useful.

The thickness of most webs requires precise control of the spacing between the knife and anvil. Insufficient space may lead to severing of the web when perforation is desired and increase the rate of knife edge deterioration. Too much space may result in the web failing to be severed or perforated by the knife. Bulk rolls of web materials may be up to 1.83 metres (6 feet) wide, requiring the rotary knife to span the width of the roll. Maintaining a separation tolerance between knife and anvil on the order of 0.0127 mm (0.0005 inches) on a roll that may span up to 1.83 metres (6 feet) requires the knife roll to be robust and the connection between knife and roll stably secure, yet allow the knife to be removed for sharpening with reasonable ease.

Web speeds in modern rewinding machines can approach 213.4 metres per minute (700 feet per minute). Rolls in the web path may thus be subjected to correspondingly high rotational speeds which generates heat in bearings and connections to the machine structure. As the rewinding machine continues to operate, thermal expansion may affect the spatial relationship of critical interfaces in the machine, including the knife-anvil interface, which results in inconsistent performance of the rotary cutting device.

### SUMMARY OF THE INVENTION

Accordingly, the present invention, in any of the embodiments described herein, may provide one or more of the following advantages:

It is an object of the present invention to provide an improved rotary cutting device for a web converting machine that maintains spatial tolerance between a knife and anvil in the cutting device as the machine undergoes thermal expansion. The rotary cutting device comprises a roll having at least one knife affixed thereon, the roll being rotatably mounted to the machine by bearings disposed on opposing ends of the roll and supported by bearing mounts connected to the machine. A thermal isolator is disposed between the bearing mounts and the machine to inhibit heat transfer from the bearings into the machine structure and the bearing mount is oriented so that thermal growth or expansion in the mount aligns perpendicularly to a plane in which the knife and anvil interface.

It is a further object of the present invention to provide an improved rotary cutting device for a web converting machine that maintains spatial tolerance between a knife and anvil in the cutting device by minimizing stress-induced deflections in the knife roll. The rotary cutting devices comprises a roll having at least one knife affixed, typically helically, thereon, and the roll being rotatably mounted to the machine by bearings disposed on opposing ends of the roll and supported by bearing mounts connected to the machine. In rolls having a single knife, stresses induced by connecting the typically planar knife to the slight helical mounting connection on the roll can lead to minor deflection of the roll from its rotating axis. To counteract these stresses, a second knife location is provided, symmetrically positioned in relation to the first knife, and a second knife lacking a cutting edge is mounted to produce symmetric stresses in the roll thereby minimizing any deflection in the roll.

It is a still further object of the present invention to provide an improved rotary cutting device for a web converting machine that maintains spatial tolerance between a knife and anvil in the cutting device by managing thermal and stress-induced deflections in the rotary cutting device that is durable in construction, inexpensive of manufacture, free of maintenance, easily assembled, and simple and effective to use.

These and other objects are achieved in accordance with the present invention by providing a rotary cutting device preferably comprising a roll having at least one knife affixed thereon, the roll being rotatably mounted to the machine by bearings disposed on opposing ends of the roll and supported by bearing mounts connected to the machine. A thermal isolator is preferably disposed between the bearing mounts and the machine to inhibit heat transfer from the bearings into the machine structure and the bearing mount is preferably oriented so that thermal growth or expansion in the mount aligns perpendicularly to a plane in which the knife and anvil interface. The roll is further preferably provided with at least two knife mounting positions, symmetrically arranged on the roll, so that stresses induced by the knife-to-roll connection are balanced and thus do not cause asymmetric deflection of the roll.

### BRIEF DESCRIPTION OF THE DRAWINGS

The advantages of this invention will be apparent upon consideration of the following detailed disclosure of the invention, especially when taken in conjunction with the accompanying drawings wherein:
FIG. 1 illustrates a conventional web cutting device on which the present invention is useful;
FIG. 2 illustrates the web cutting device of FIG. 1 upon which the present invention is shown incorporated;

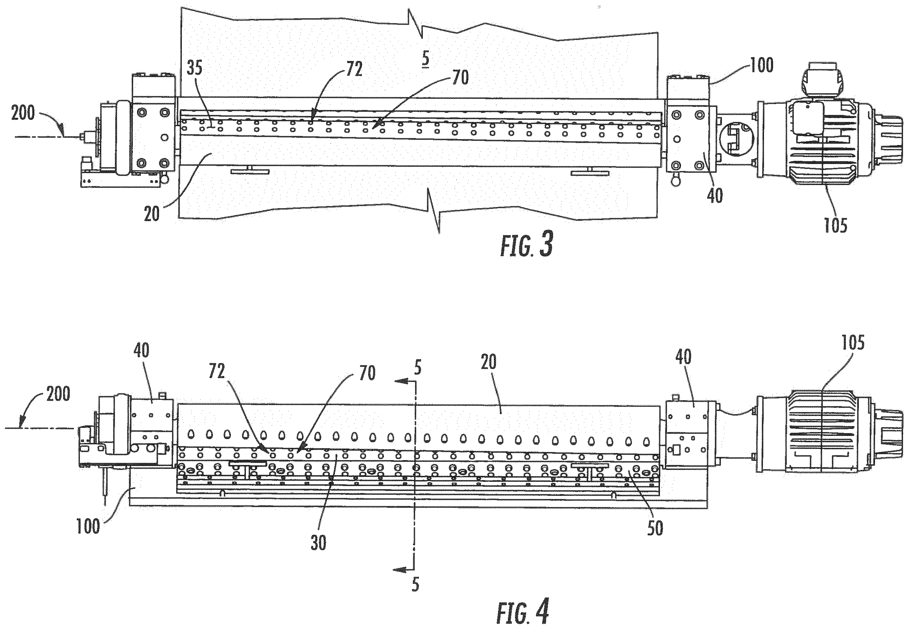

FIG. 3 is a plan view of the web cutting device of FIG. 2;
FIG. 4 in an elevation view of the web cutting device of FIG. 3;
FIG. 5 is a section view of the web cutting device of FIG. 4 taken along cut line 5 -- 5;
FIG. 6 is a second view of FIG. 5 illustrating thermal displacement in the roll cutter mount and the effect on cutter alignment with the present invention;
FIG. 7 is a partial elevation view of the prior art web cutting device of FIG. 1 illustrating stress-induced deflection in the cutter roll that may occur in the absence of the present invention; and
FIGS. 8 and 9 illustrate the effect of a second aspect of the instant invention on cutter roll deflection and roll cutter perforation quality.

### DESCRIPTION OF THE PREFERRED EMBODIMENT(S)

Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Also, any reference herein to the terms "up" or "down," or "top" or "bottom" are used as a matter of mere convenience and are determined as the machine would normally rest on a level surface. Furthermore, the various components shown or described herein for any specific application of this invention can be varied or altered as anticipated by this invention and the practice of a specific application of any element may already be widely known or used in the art by persons skilled in the art and each will likewise not therefore be discussed in significant detail. When referring to the figures, like parts are numbered the same in all of the figures.

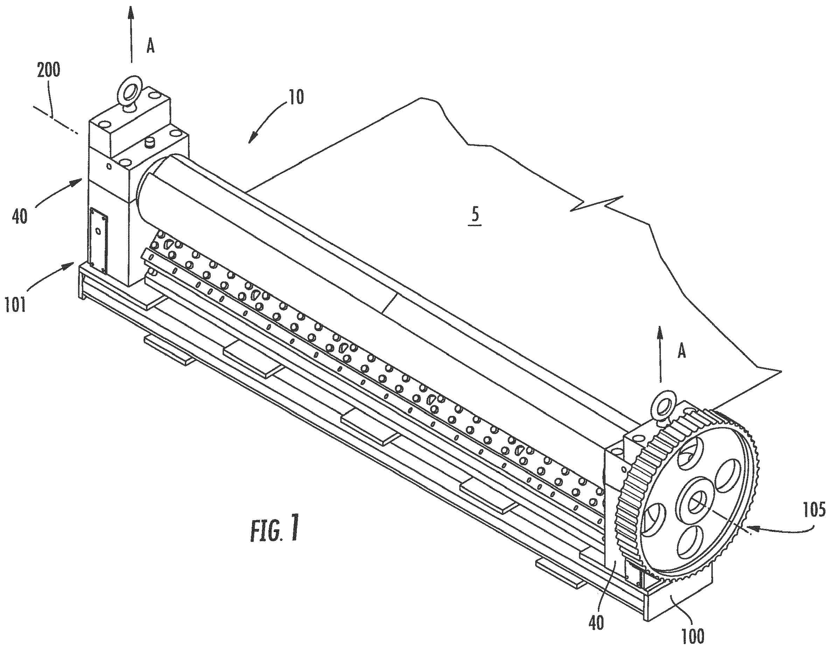

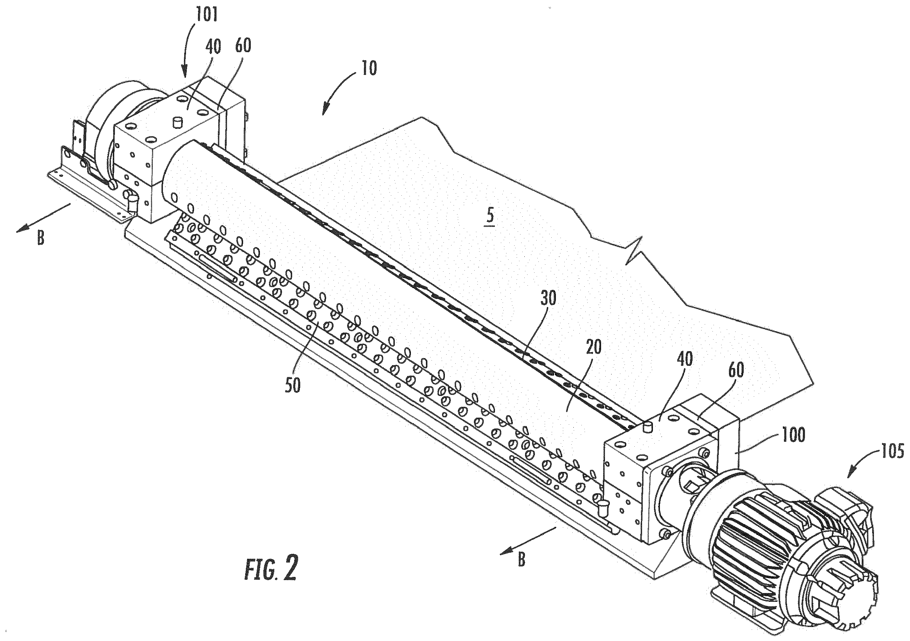

Referring to FIGS. 1 and 2, there is shown a web cutting device 10 of the type commonly used in roll converting machines in which a continuous web 5 is moved to the web cutting device 10, severed or perforated by interaction with a knife 30 on a roll cutter 20, and moved away from the cutting device 10 by a discharge conveyor, if severed. A conventional frame 100 is provided for rotatably supporting the cutting device and appropriate drive(s) 105 for rotating the roll cutter 20 at a speed required to sever/perforate the web into sheets of a desired length. The roll cutter 20 is supported by bearings (not shown) at opposite ends thereof to enable rotation of the roll cutter about a roll centerline or axis 200 that is generally transverse to the web 5. The bearings are connected to and supported by the frame 100 of the roll converting machine by bearing support blocks 40. A cutting anvil 50 is also connected to the frame 100 of the roll converting machine, preferably sharing a common anchorage with the bearing support blocks 40 to preclude relative movement between the cutting anvil 50 and the roll cutter 20 during operation. Alternatively, the anvil 50 may comprise a roll similar to the roll cutter with a peripherally disposed anvil surface which interacts with the knife as the adjacent rolls rotate, rotation being synchronized to enable the knife and anvil to interact.

The roll cutter 20 and cutting anvil 50 extend for at least the width of the web 5. In practice, web widths ranging from 91 cm to 183 cm (36 to 72 inches) are common.

Desired production rates in modern web converting machines require web travel speeds ranging from 69.6 to 213.4 metres per minute (200 to 700 feet per minute). Upward pressure for production efficiency improvements pushes development of machines using even higher web speeds. With higher web speeds comes increased heat generation in the bearings and other friction interfaces.

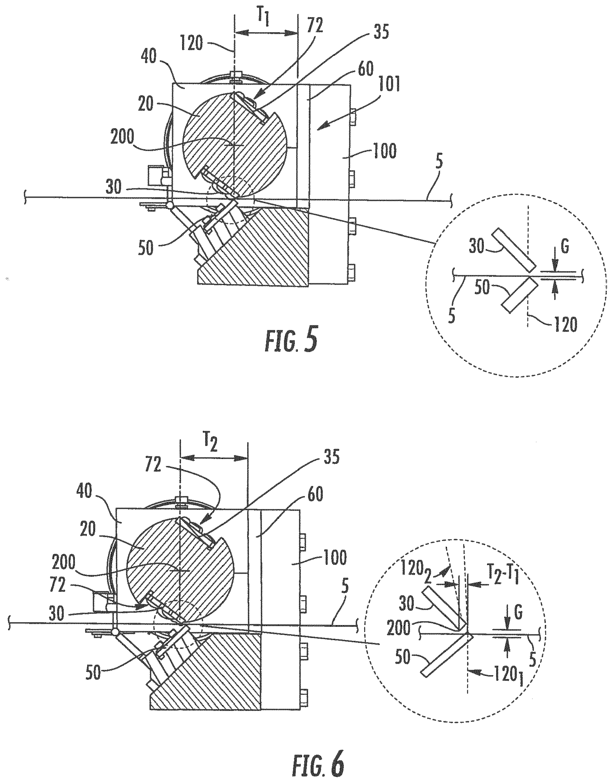

Maintaining close spatial tolerance in the gap between the knife 30 and the anvil 50 of the web cutting device 10 is essential for high production efficiency, especially for perforation of the web. The web converting machine 10 may be required to handle web thicknesses ranging from 0.13 mm to 2.5 mm (0.005 to 0.100 inches). This gap "G" (see FIGS. 5 and 6) must be maintained within a tight tolerance throughout the operating temperature range of the machine since movement on the order of the web thickness being processed will negatively affect roll cutter performance.

Thermal displacement in the frame 100 caused by heat transfer from the roll cutter bearings can cause movement of the roll cutter centerline 200 away from the anvil 50 (shown as arrow "A" in FIG. 1) thereby causing gap G (best shown in FIGS. 5 and 6) to increase. This is illustrated in FIG. 1 wherein thermal expansion of the bearing support blocks 40 displaces the roll centerline upward, opening the gap spacing between the knife 30 and the anvil 50. A first aspect of the present invention addresses this problem, illustrated in FIG. 2, by reorienting the connection interface 101 between the bearing support block 40 and the frame 100 to generally perpendicular to the web passing tangential to the knife roll. This bearing block mount orientation results in thermal expansion in the bearing support block causing displacement of the roll cutter centerline 200 primarily along an axis that is generally parallel to the web, shown as arrow "B" in FIG. 2. Note that an axis parallel to web 5 is also generally perpendicular to a cutting plane 120 in which the knife 30 and anvil 50 interact, as is best illustrated in FIGS. 5 and 6. Cutting plane 120 is defined by the edge of the anvil 50 and the roll cutter centerline 200 and may thus vary slightly from perpendicular to the web. Thermal effects thus do not dramatically alter the vertical spacing between the anvil and the roll cutter centerline, but simply cause the cutting plane 120 to be angled slightly as thermal expansion occurs.

Further limitation of thermally induced effects on knife positioning and gap G is provided by incorporating a thermal isolator 60 between the bearing support blocks 40 and the frame 100 to limit heat transfer from the support blocks 40 to the machine frame 100 which might otherwise contribute to thermal expansion of the frame members along an axis perpendicular to the web feed path.

In FIG. 5, the edges of the knife 30 and anvil 50 align on the cutting plane 120, producing a clean cut or perforation. FIG. 6 illustrates the thermal shift of the roll cutting centerline 200 that occurs due to thermal expansion of the support block 40. Though shown exaggerated for illustration purposes, the shift (T₂-T₁) may be in the order of 0.025 mm to 0.127 mm (0.001 to 0.005 inches) due to thermal expansion, but rather than directly increasing the gap between the knife 30 and anvil 50, the shift causes the cutting plane 120 to be angled slightly, from plane 120₁ to plane 120₂, with reference to the web while minimizing the effect on the vertical spacing between the knife 30 and anvil 50. The altered orientation of the main axis of thermal growth reduces the adverse impact of cutting quality due to thermal growth or expansion. The initial orientation of cutting plane 120 may also be adjusted so that the knife 30 and anvil 50 align on the preferred perpendicular cutting plane when the machine is at operating temperature so that a greater proportion of web cuts are may under optimal conditions.

The thermal isolator 60 is preferably constructed of a material that is thermally stable and has a low coefficient of thermal conductance, lower or significantly lower compared to the ferrous material comprising the frame and bearing support blocks and preferably lower by one or more orders of magnitude. In one embodiment, a thermal isolator 60 is fabricated from mica, which has a thermal conductance approximately two orders of magnitude less that iron or steel, has demonstrated acceptable results.

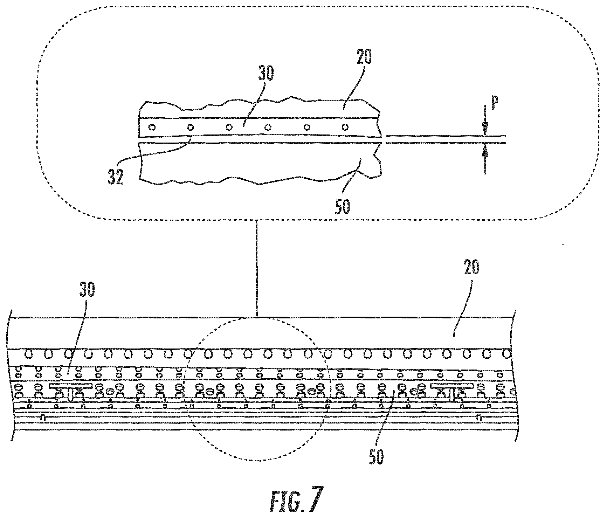

In addition to stabilizing the relative position between the knife and anvil overall, a second aspect of the invention is directed toward improving the spatial relationship between the knife 30 and the anvil 50 along the extent of its transverse span across the web. FIG. 7 illustrates the cutter roll 20 equipped with only a single knife 30, the preferred cutter roll arrangement wherein the web is severed or perforated with each revolution of the cutter roll. The rotational speed of the knife is determined based on the desired sheet length or perforation spacing desired so that the knife interfaces with the web on the desired spacing interval. For example, if a sheet length of 0.305 metres (1 foot) is desired and the web is travelling at 152 metres per minute (500 feet per minute), the knife roll needs to rotate at 500 rpm to achieve the desired sheet length. The knife roll must be sized so the circumferential speed is greater than the web speed, at least 15% greater is preferred.

The preferred knife arrangement on the cutter roll aligns the knife on a slight helix of the cutter roll so that the knife and anvil interact in a double helix fashion to produce a "scissors-type" of shearing of the web. The knives are typically formed from flat metal stock which must then be twisted when attached to the cutter roll. The stresses introduced which attaching a knife formed from a 51 mm (2 inch) wide strip of 6.4 mm (0.25 inch) thick plate are significant and lead to bowing of the cutter roll.

A single knife 30 is secured to the cutter roll using a connector arrangement 70 comprising a plurality of fasteners 72 generally uniformly spaced along the knife-cutter roll interface for the entire length of the cutter roll to create a robust connection of the knife to the roll. The fasteners 72 are preferably positioned on approximately 51 mm to 76 mm (2 to 3 inch) spacing for the entire width of the roll cutter 20. Multiple fasteners (e.g., pairs) may be used at each lateral location. As a result, the fasteners 72 may easily number eight or more for every 305 mm (12 inches) of cutter roll width. Stresses introduced by bending the knife to securing it to the cutter roll 20 result in a static mechanical stress imbalance in the cutter roll that may cause slight deflection from its roll centerline 200. Cutter roll deflections induced by the knife mounting stresses may be compounded as the cutter roll temperature increases during operation.

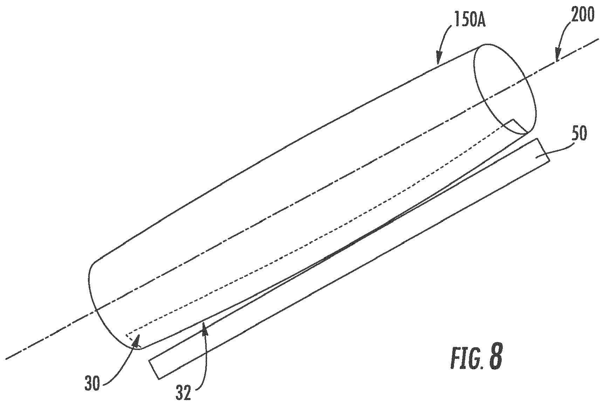

Any deflection can cause the edge 32 of the knife 30 being slightly bowed from a straight-line interface with the anvil 50 which is typically greatest at mid-span of the cutter roll. Even though the maximum displacement may be only in the order of 0.05 mm (a few thousandths of an inch), the result in less than adequate cutting or perforation of the web by the knife, typically in the middle of the web width where the knife edge will be closer to the anvil than desired and potentially resulting in contact between the knife edge and the anvil which may damage the knife. This is best illustrated in FIG. 8 in which the peripheral path 150A defined by the knife edge 32 is illustrated on a cutter roll that is deflected by installation of the knife 30. Instead of a desired cylindrical profile, an eccentricity may be introduced in the cutter roll, displacing the peripheral path 150 further from the roll axis 200 at midspan of the cutter roll compared to the displacement closer to the bearing supported ends. In extreme conditions, the knife edge 32 may even contact the anvil 50. More commonly, the eccentricity causes the knife edge to be shifted away from the anvil in the mid-span portion of the cutter roll, best illustrated as gap "P" in FIG. 7. In this condition, the knife edge displacement may even result in the knife failing to contact the web in mid-span.

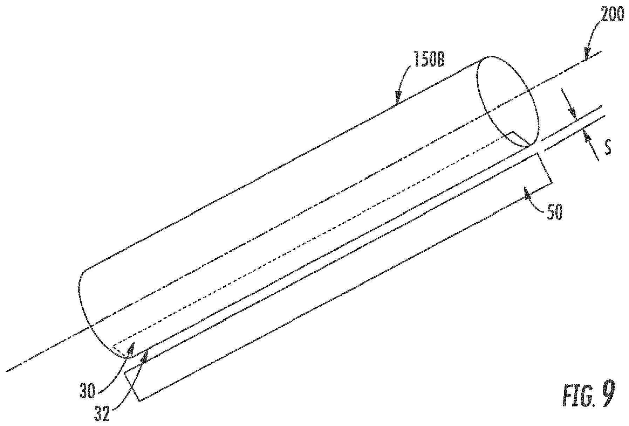

As is best illustrated in FIGS. 5 and 6, the second aspect of the present invention addresses this shortcoming by attaching a stress balancing member 35 in diametric opposition to the knife 30 on the cutter roll 20. The cutter roll 20 is configured to the knife 30 and the stress balancing member 35 in a physically and dimensionally symmetrical configuration in relation to the roll axis 200. With such attachments, a symmetric cutter roll is balanced to minimize deflections when rotating. The stress balancing member 35 is, in essence, a knife that lacks a cutting edge so that it does not interact with the web when positioned adjacent thereto. The stress balance member 35 is similar in physical configuration (e.g., mass, dimensions) to the knife 30 with the exception of its lack of a cutting edge 32 to maintain rotational balance of the cutter roll. The symmetric positioning of the stress balancing member 35, the similarity of physical configuration, and the use of the same connector arrangement 70 as that attaching knife 30 to the cutter roll rotationally balances the cutter roll and also balance the static stresses applied to the cutter roll by connection of the knife and balance member thereby minimizing stress-induced deflection (eccentricity) of the cutter roll 20 peripheral path 150B resulting in minimized variation in the spacing between the knife edge 32 and the roll axis 200 along the length of the cutter roll. This is best illustrated in FIG. 9 which illustrated a generally cylindrically shaped peripheral path 150B that results in uniform spacing "S" along the entire length of the knife 30. This improvement remains as the cutter roll reaches operating temperature. The result is more uniform cutting interaction between the knife 30 and the anvil 50 along the entirety of the web width.

Naturally, the invention is not limited to the foregoing embodiments, but it can also be modified in many ways without departing from the scope of the claims. Changes in the details, materials, steps and arrangements of parts which have been described and illustrated to explain the nature of the invention will occur to and may be made by those skilled in the art upon a reading of this disclosure within the scope of the claims. The foregoing description illustrates the preferred embodiment of the invention; however, concepts, as based upon the description, may be employed in other embodiments without departing from the scope of the claims.

## Claims

1. A thermal compensating mount for a cutting apparatus (10) in a web processing machine comprising:
a base frame (100) supporting a feed path along which a web (5) of material travels;
an anvil (50) supported by the base frame (100); and
a roll cutter (20) with a knife (30), the roll cutter (20) being generally parallel to and spaced apart from the anvil (50) to permit passage of the web (5) therebetween, the knife (30) arranged to interact with the web (5) and the anvil (50) to perforate the web (5), the roll cutter (20) being supported along a roll axis (200) by a bearing support block (40) connected to the base frame (100), the connection of the bearing support block (40) to the base frame (100) arranged to limit thermal expansion in the bearing support block to occur predominately along an axis generally parallel to the feed path thereby minimizing changes in the spacing between the anvil (50) and the roll cutter knife (30).

2. The thermal compensating mount of claim 1, further comprising a thermal isolator (60) disposed between the base frame (100) and the bearing support block (40), the thermal isolator (60) limiting heat transfer into the base frame (100) thereby reducing thermal expansion of the base frame (100) and the resulting effect on spacing between the anvil (50) and the roll cutter knife (30).

3. The thermal compensating mount of claim 2, wherein the thermal isolator (60) comprises a material having low thermal conductivity compared to materials comprising the base frame (100).

4. The thermal compensating mount of claim 2 or 3, wherein the thermal isolator material is mica.

5. A thermal compensating cutting apparatus mount for a web processing machine comprising:
a base frame (100) supporting a feed path along which a web (5) travels;
an anvil (50) supported by the base frame (100) transverse to the feed path;
a cutting roll (20) rotatably supported by a bearing support block (40), the cutting roll (20) having a peripherally attached knife (30) for perforating the web (5) by interaction between the knife (30) and the anvil (50) as the web (5) passes therebetween; and
a thermal isolating connection between the bearing support block (40) and the base frame (100) having an interface aligned generally perpendicularly to the feed path to limit movement of the cutter roll (20) due to thermal expansion of the bearing support block (40) to an axis parallel to the feed path.

6. The cutting apparatus mount of claim 5, further comprising a thermal isolator (60) disposed at the interface between the base frame (100) and the bearing support block (40), the thermal isolator (60) limiting heat transfer from the bearing support block (40) into the base frame (100) thereby reducing thermal expansion of the base frame (100) and the resulting effect on spacing between the anvil (50) and the roll cutter knife (30).

7. The cutting apparatus mount of claim 6, wherein the thermal isolator (60) comprises a material having low thermal conductivity relative to materials comprising the base frame (100) and bearing support block (40).

8. The cutting apparatus mount of claim 7, wherein the thermal isolator material is mica.

9. In a web processing machine having a base frame (100) supporting a conveyor defining a feed path along which a web (5) of material is moved and a web cutting means (10) transversely spanning the web (5), the web cutting means (10) configured to perforate the web (5) as it is moved along the feed path, the improvement in the web cutting means (10) comprising:
an anvil (50) supported by the base frame (100) transversely spanning the web (5) adjacent to a first side of the web moving along the feed path;
a rotating cutter roll (20) supported by first and second bearings to transversely span the web (5) adjacent to a second side of the web (5) opposite of the first side, the first and second bearings being held in position by first and second bearing blocks (40), respectively;
a knife (30) affixed to the cutter roll (20) for rotation therewith positioned to interact with the web (5) with each rotation and separated from the anvil (50) by a gap; and
a thermal isolating connection between the bearing support blocks (40) and the base frame (100) to limit movement of the roll cutter knife (30) due to thermal expansion of the bearing blocks (40) to an axis generally parallel to the feed path.

10. The web cutting means (10) of claim 9, wherein the thermal isolating connection between the bearing support block (40) and the base frame (100) comprises an interface aligned generally perpendicularly to the feed path to limit movement of the knife roll (20) due to thermal expansion of the bearing support block (40) to an axis parallel to the feed path.

11. The web cutting means (10) of claim 10, further comprising a thermal isolator (60) disposed at the interface between the base frame (100) and the bearing support block (40), the thermal isolator (60) limiting heat transfer from the bearing support block (40) into the base frame (100) thereby reducing thermal expansion of the base frame (100) and the resulting effect on spacing between the anvil (50) and the roll cutter knife (30).

12. The web cutting means (10) of claim 11, wherein the thermal isolator (60) comprises a material having low thermal conductivity relative to materials comprising the base frame (100) and bearing support block (40).

13. The web cutting means (10) of claim 11 or 12, wherein the thermal isolator material is mica.
